# EUROPEAN PATENT SPECIFICATION

(11) **EP 3 241 083 B1**
(45) Date of publication and mention of the grant of the patent: **31.07.2019**
(21) Application number: 14828167.8
(22) Date of filing: 30.12.2014
(51) Int. Cl.: G05B 19/4093

(54) **A METHOD FOR OPTIMIZING A ROBOT PROGRAM OF A WELDING ROBOT UNIT**
VERFAHREN ZUR OPTIMIERUNG EINES ROBOTERPROGRAMMS EINER SCHWEISSROBOTERANLAGE
PROCÉDÉ D'OPTIMISATION D'UN PROGRAMME ROBOTIQUE D'UN ROBOT DE SOUDAGE

(43) Date of publication of application: 08.11.2017
(73) Proprietor: ABB Schweiz AG, 5400 Baden (CH)
(72) Inventor: SVENSSON, Tommy, Denver, Colorado 80238 (US)
(74) Representative: Savela, Reino Aleksi
(86) International application number: PCT/EP2014/079400
(87) International publication number: WO 2016/107639

(56) References cited:
- EP-A2- 1 304 194
- WO-A1-2014/140743

## Description

### TECHNICAL FIELD

The present invention relates to a method for optimizing a robot program of a welding robot unit. The method is based on using geometrical data of one or more workpieces and data on welding parameters recorded when executing the robot program in a welding operation. In particular, the invention relates to optimizing the robot program for a seam welding robot.

### BACKGROUND ART

It is often desired to make adjustment to a robot program of a welding robot unit in order to improve the quality of the weld. This is in particular of importance when the robot program is to be repeated many times with one or more workpieces in the same configuration.

When the welding robot unit is used in a welding operation and forms a weld along a welding path, a large amount of data relating to welding parameters is recorded and is compiled into a log file. The data is for example voltage, current, contact pressure, robot positions, displacement speed of robot arm, correction made to the robot path, and etcetera.

A problem when making adjustment to a robot program is that small change of a welding parameter may have a large effect on the quality of the weld. Furthermore, the welding parameters often need to be different at different locations on the welding path. Accordingly, a large number of test runs may be necessary before suitable welding parameters are found for the welding operation with the workpieces in the same configuration.

A problem when making such adjustment to a robot program is that the log file often comprises a large amount of data relating to the welding operation and it is difficult for an operator to get an overview of the variation of the welding parameters along the welding path. Thereby, it is difficult for the operator to adjust the parameters of the robot program, for example at certain positions on the welding path, in order to optimize the robot program so that the quality of the resulting weld in the welding operation is improved.

US8569646B2 discloses an arc welder comprising a monitor for monitoring variables during a welding process and quantifying the quality of a weld.

US6459958B1 discloses a data display device for a welding robot. A log file containing data of welding current is displayed in the form of line graphs for a plurality of welding operations.

EP1304194A2 discloses a robot simulation apparatus displaying simulated operations of a robot mechanical unit and a peripheral device such as a welder.

### SUMMARY OF THE INVENTION

An object of the present invention is to provide a method for optimizing a robot program of a welding robot unit. In particular, a first object of the invention is to enable the data of a log file to be more comprehensible for a user. A second object of the invention is to facilitate adjustment of a robot program for a welding robot unit in order to improve the quality of the welding operation.

These objects are obtained by a method for optimizing a robot program of a welding robot unit. The method comprises:
- compiling in a log file information relating to a welding path on one or more workpieces, and welding parameters recorded when executing the robot program in a welding operation forming a weld on the one or more workpieces, and
- processing the log file to form a geometrical visualization of the log file so that the welding parameters are paired with geometrical positions of the weld.

The log file is compiled from welding parameters that were recorded in a previous welding operation on the one or more workpieces. The log file lists how the welding parameters vary along a welding path in the welding operation.

The data of the log file is processed so that the welding parameters are paired with geometrical positions and are displayed in the geometrical visualization. The geometrical visualization is arranged so that it discloses the one or more workpieces, the weld and welding parameters relating to certain positions on the weld. The geometrical visualization of the log file makes the variation of the welding parameters along the welding path comprehensive to a user. The geometrical visualization enables the welding parameters of the robot program to be adjusted easily at certain positions on the welding path in order to optimize the robot program and improve the quality of the weld.

According to an embodiment of the invention, the method comprises:
- positioning the one or more workpieces in a predetermined configuration,
- creating the robot program by input of data for the welding operation in respect to the welding path, and
- executing the robot program, thereby forming the weld on the one or more workpieces while recording welding parameters in respect to geometrical positions on the one or more workpieces.

The data for the log file is collected when the robot program is executed so that the robot unit performs a welding operation on the one or more workpieces. During the welding operation, the actual welding parameters are recorded and compiled in the log file.

According to an embodiment of the invention, geometrical data of the one or more workpieces is compiled in the log file.

According to an embodiment of the invention, the method comprises:
- adjusting the robot program by adjusting one or more welding parameters in respect to one or more geometrical positions of the weld, thereby forming an adjusted robot program,
- executing the adjusted robot program, thereby forming a new weld on one or more workpieces,
- compiling in a new log file information relating to a welding path of the new weld, and welding parameters recorded while executing the adjusted robot program, and
- processing the new log file to form a new geometrical visualization of the new log file so that the welding parameters are paired with geometrical positions of the new weld.

The geometrical visualization of a previous welding operation is used when adjusting the robot program. The adjustment may be in respect to certain parts of the welding path and may relate to minor adjustment of one or more welding parameters. Thereby, an adjusted robot program is created. The adjusted robot program is executed in a new welding operation on the one or more workpieces while new data from the new welding operation is recorded. The new data on the welding parameters are compiled in a new log file that is processed to form a new geometrical visualization.

The geometrical visualization facilitates in creating an optimized robot program for the one or more workpieces in the predetermined configuration. Thereby, the quality of a weld from such welding operation is improved.

According to an embodiment of the invention, the method comprises repeating a sequence of the steps in claim 3 until an optimized adjusted robot program has been created.

By repeating the steps of adjusting the robot program in view of the geometrical visualization of the log file, executing the adjusted robot program while recording welding parameters and compiling the welding parameters in a new log file that is processed to form a new geometrical visualization, the robot program is step by step optimized. The welding operation and the quality of the weld from such optimized robot program are improved.

According to an embodiment of the invention, the geometrical positions are given in three dimensions and the geometrical visualization is a three dimensional representation disclosing the log file so that the welding parameters are paired with geometrical positions of the weld at the one or more workpieces. By pairing the welding parameters with geometrical positions of the weld, it is possible to review and adjust one or more of the parameters at certain location at the welding path.

According to the invention, the welding path is divided into a plurality of clusters, each cluster comprising information on the welding parameters at the respective portion of the welding path, wherein the clusters are marked on the geometrical visualization of the log file. For example, the clusters are visually represented by a marking with symbols on the welding path of the geometrical visualization. The symbols are for example dots, crosses, squares, and etcetera.

According to an embodiment of the invention, the method comprises
- receiving input of a selection of one or more clusters, and
- displaying detailed information of the welding parameters relating to the respective portion of the welding path of the selected one or more clusters.

According to an embodiment of the invention, the method comprises using the geometrical visualization of the log file to replay the formation of the weld or certain parts of the weld.

According to an embodiment of the invention, the clusters may have different status, wherein the status of a cluster is indicated with different symbols. For example, the different status is indicated by arranging the dots with different colors. The different status may for example relate to a selected cluster that is being displayed in a graph of the geometrical visualization or a cluster that will be used in a replay of the formation of the weld.

According to an embodiment of the invention, the welding parameters are at least one of voltage, current, contact pressure, displacement speed of a robot arm and correction made to a robot path.

According to an embodiment of the invention, the welding robot unit is configured to form a seam weld on the one or more workpieces.

According to an embodiment of the invention, the welding robot unit comprises one or more sensors adapted to gather information relevant to the welding operation, and wherein the robot program is configured, while being executed, to be automatically adjusted on basis of said recorded information, wherein said information on the adjustments are included in the log file.

The automatic adjustment may for example relate to an incremental correction to the welding path. The welding operation may thus relate to an adaptive robot welding operation. Accordingly, the outcome of welding parameters of a welding operation is not fixed and the recorded welding parameters when executing the robot program provide the actual outcome of the welding operation.

### BRIEF DESCRIPTION OF THE DRAWINGS

The invention will be explained in greater detail with reference to the accompanying drawings, wherein
Fig. 1 discloses an embodiment of a welding robot unit controlled by a robot controller.
Fig. 2 discloses a method for optimizing a robot program of a welding robot unit according to a first embodiment of the invention.
Fig. 3 discloses a method for optimizing a robot program of a welding robot unit according to a second embodiment of the invention.
Fig. 4 discloses an example of geometrical visualization of a log file according to an embodiment of the invention.
Fig. 5 discloses an example of a graph of a welding parameter from a selected cluster according to an embodiment of the invention.

### DESCRIPTION OF PREFERRED EMBODIMENTS

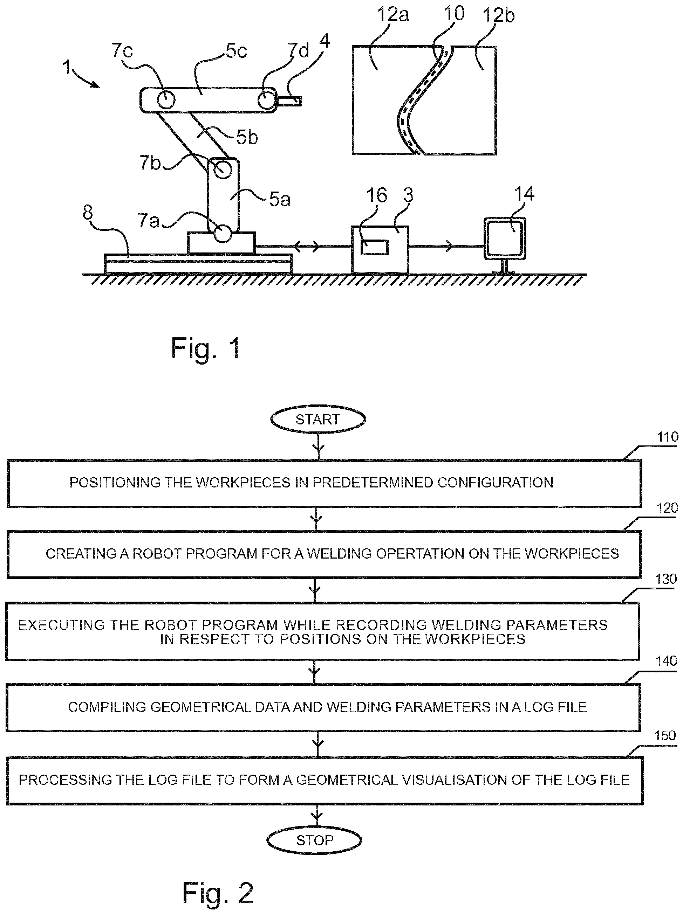

Fig. 1 shows a welding robot unit 1 controlled by a robot controller 3. The robot unit 1 comprises a plurality of robot arms 5a-c. In the disclosed embodiment in fig. 1, the robot unit 1 comprises three robot arms 5a-c and a welding tool 4 attached to the outer of the robot arms 5c. The welding tool 4 is for example a welding gun for forming a weld in a welding operation.

The robot arms 5a-c comprise one or more motion mechanisms 7a-d, 8 adapted to set the robot arms 5a-c in motion. The motion mechanisms 7a-d, 8 comprise rotational axes 7a-d and a translation mechanism 8. The rotational axes 7a-d provide rotational movements of the robot arms 5a-c. The translation mechanism 8 provides a displacement of the robot arms 5a-c. In the disclosed embodiment in fig. 1, the robot unit 1 comprises in total four rotational axes 7a-d and one translation mechanism 8 in the form of a guide rail used for displacing the robot arms 5a-c.

The robot controller 3 is adapted to execute a robot program so that the welding robot unit 1 performs a welding operation along a welding path 10 on the one or more workpieces 12a-b and forms a weld on the one or more workpieces 12a-b. In fig. 1 a first workpiece 12a and a second workpiece 12b are displayed. The welding path 10 is indicated by a dotted line between the two workpieces 12a-b.

The robot controller 3 controls the welding robot unit 1 so that the welding robot unit 1 is operated along the welding path 10 and varies the welding parameters in dependency of the location on the welding path 10.

According to an embodiment, the welding robot unit 1 is an adaptive welding robot unit that receives information from sensors, such as relating to contact pressure, geometrical location on the one or more workpieces 12a-b, etcetera, and corrects one or more of the welding parameters on basis of the received sensor information during executing the robot program. Accordingly, at least one or more of the welding parameters are not fixed by the robot program and are instead dependent on the actual condition of the welding operation. The actual welding parameters are recorded when executing the robot program.

The robot controller 3 is adapted to receive information on geometrical data of the one or more workpieces 12a-b and record welding parameters when executing the robot program in the welding operation. The geometrical data of the one or more workpieces 12a-b and the recorded welding parameters are compiled into a log file.

The robot controller 3 comprises a control module and a graphical module. The control module is adapted to control the operation of the robot unit 1 according to the robot program. The graphical module is adapted to process the information in the log file and form a geometrical visualization of the log file. The geometrical visualization is configured to be displayed on a display unit 14 connected to the robot controller 3. The robot controller 3 comprises a logic unit 16, such as a central processing unit (CPU). The control module and the graphical module may be implemented on a software program that is executed by the logic unit 16 of the robot controller 3. The graphical module may furthermore be arranged on a separate unit from the robot controller 3, such as on an external computer.

Fig. 2 discloses a method for optimizing a robot program of the welding robot unit 1 according to an embodiment of the invention.

The method is initialized, in a step 110, by positioning the one or more workpieces 12a-b in a predetermined configuration. The optimization of the robot program relates to a repeated welding operation with the workpieces 12a-b in the same configuration.

The method comprises, in a step 120, creating the robot program for the welding operation on the workpieces by input of data for the welding operation, such as welding parameters and welding path for the welding operation. The robot program is thereafter, in a step 130, executed so that the welding robot unit 1 performs the welding operation while the welding parameters are recording in respect to geometrical positions on the workpieces 12a-b. The recorded data is in a step 140 compiled into a log file. The log file comprises data of variation of the welding parameters relating to different positions on the workpieces 12a-b.

The method steps of 110 to 130 relate to the creation and execution of a robot program for the welding operation of the welding robot unit 1. During the execution of the robot program relevant data for a log file is recorded. It shall be understood that step 140 of the method may also be applied on already existing recorded data from a previous welding operation of a robot program.

The method comprises, in a step 150, processing the log file so that the welding parameters are paired with geometrical positions of the weld at the one or more workpieces and forming a geometrical visualization of the paired data. The geometrical visualization is displayed on the display unit 14.

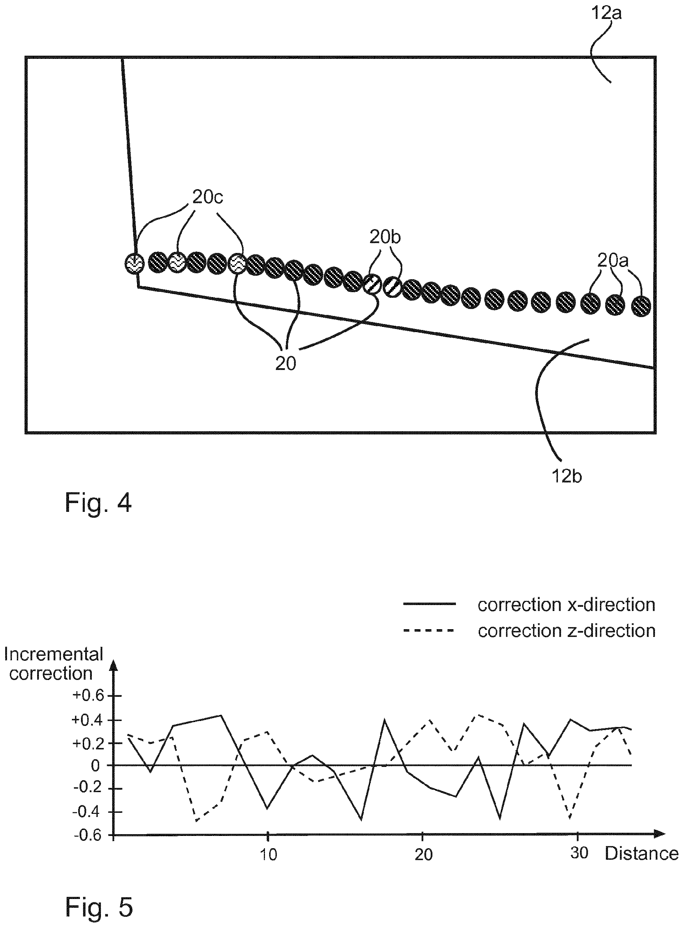

Figure 4 discloses an example of a geometrical visualization of a log file on a three dimensional visualization showing the workpieces 12a-b. Thereby, the welding path of the welding operation is indicated. The welding path is divided into clusters, each cluster comprising information on the welding parameters at the respective portion of the welding path. In fig. 4 the clusters are represented as dots 20 on the geometrical visualization of the log file.

According to an embodiment of the invention, different statuses of the clusters are indicated by a plurality of different symbols 20a-c of the clusters on the geometrical visualization. In fig. 4 three different types of statuses of the clusters are disclosed. A first symbol 20a relates to clusters at a default status. A second symbol 20b relates to clusters that have been selected by the user at the moment, and the data of which are for example disclosed in the form of graphs. A third symbol 20c relates to clusters that are to be used in a replay of the formation of the weld.

Fig. 5 discloses an example of the display of a graph of welding parameters at one selected cluster. In fig. 5 the welding parameters relate to incremental correction of the welding path in two directions at the respective portion of the welding path.

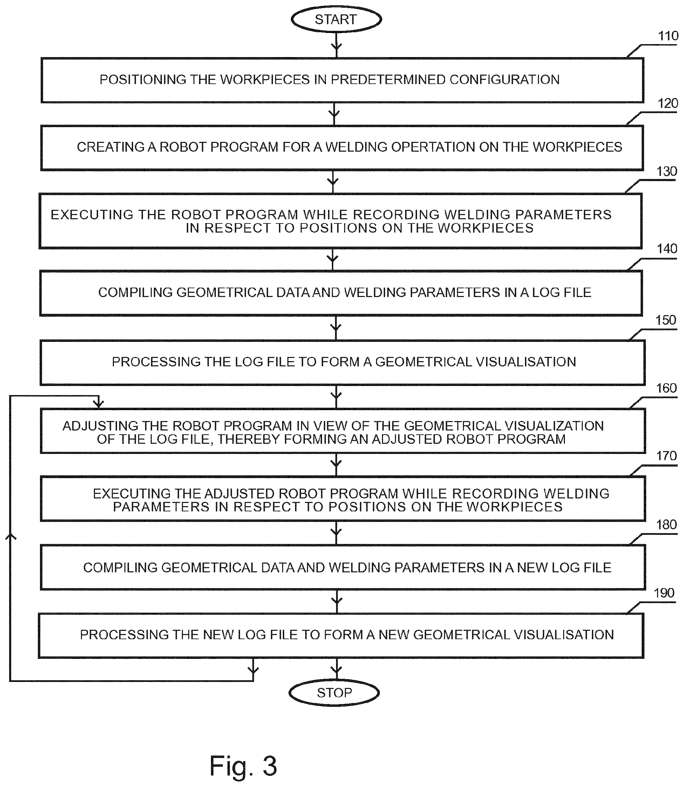

Fig. 3 discloses a method for optimizing a robot program of the welding robot unit 1 according to a second embodiment of the invention. In fig. 3 the initial method steps of 110 to 150 are the same as in the embodiment of fig. 2.

The method in fig. 3 differs from the embodiment of fig.2 in that the geometrical visualization of the log file, comprising the welding parameters that were recorded when executing the robot program, is used for supporting adjustment of the robot program. Accordingly, in a step 160, at least some of the welding parameters relating to one or more positions on the weld are adjusted in view of the geometrical visualization of the log file. Thereby, an adjusted robot program is created.

In a step 170, the adjusted robot program is executed in a new welding operation on the workpieces 12a-b arranged in the same predetermined configuration as previously. While the adjusted robot program is executed, the welding parameters are recorded in respect to geometrical positions on the workpieces 12a-b. In a step 180, the geometrical data of the workpieces 12a-b and the recorded welding parameters are compiled into a new log file. The new log file is processed in a step 190 to form a new geometrical visualization of the new log file relating to the adjusted robot program.

The method further comprises repeating the steps of 160 to 190 until an optimized robot program has been created. The geometrical visualization facilitates the adjustment of the robot program. This is particularly of importance when different welding parameters are desired in different parts of the welding path. The geometrical visualization of the log file gives the operator a better overview of the large amount of welding parameters of the log file. Accordingly, the geometrical visualization of the log file facilitates the user in optimizing the robot program.

The present invention is not limited to the disclosed embodiments but may be modified within the framework of the claims. It shall be understood that the steps of the method may be performed by the robot controller or a separate unit from the robot controller.

## Claims

1. A method for optimizing a robot program of a welding robot unit (1), wherein the method comprises:
- compiling in a log file information relating to a welding path on one or more workpieces (12a-b), and welding parameters recorded when executing the robot program in a welding operation forming a weld on the one or more workpieces (12a-b), and
- processing the log file to form a geometrical visualization of the log file so that the welding parameters are paired with geometrical positions of the weld,
wherein the welding path is divided into a plurality of clusters, each cluster comprising information on the welding parameters at the respective portion of the welding path, wherein the clusters are marked on the geometrical visualization of the log file.

2. The method according to claim 1, wherein the method comprises:
- positioning the one or more workpieces (12a-b) in a predetermined configuration,
- creating the robot program by input of data for the welding operation in respect to the welding path, and
- executing the robot program, thereby forming the weld on the one or more workpieces (12a-b) while recording welding parameters in respect to geometrical positions on the one or more workpieces (12a-b).

3. The method according to any of the previous claims, wherein geometrical data of the one or more workpieces is compiled in the log file.

4. The method according to any of the previous claims, wherein the method comprises:
- adjusting the robot program by adjusting one or more welding parameters in respect to one or more geometrical positions of the weld, thereby forming an adjusted robot program,
- executing the adjusted robot program, thereby forming a new weld on one or more workpieces (12a-b),
- compiling in a new log file information relating to a welding path of the new weld, and welding parameters recorded while executing the adjusted robot program, and
- processing the new log file to form a new geometrical visualization of the new log file so that the welding parameters are paired with geometrical positions of the new weld.

5. The method according to claim 4, wherein the method comprises repeating a sequence of the steps in claim 4 until an optimized adjusted robot program has been created.

6. The method according to any of the previous claims, wherein the geometrical positions are given in three dimensions and the geometrical visualization is a three dimensional representation disclosing the log file so that the welding parameters are paired with geometrical positions of the weld at the one or more workpieces (12a-b).

7. The method according to claim 6, wherein the method comprises
- receiving input of a selection of one or more clusters, and
- displaying detailed information of the welding parameters relating to the respective portion of the welding path of the selected one or more clusters.

8. The method according to any of the previous claims, wherein the welding parameters are at least one of voltage, current, contact pressure, displacement speed of a robot arm and correction made to a robot path.

9. The method according to any of the previous claims, wherein the robot unit (1) is configured to form a seam weld on the one or more workpieces (12a-b).

10. The method according to any of the previous claims, wherein the robot unit (1) comprises one or more sensors adapted to gather information relevant to the welding operation, and wherein the robot program is configured, while being executed, to be automatically adjusted on basis of said recorded information, wherein said information on the adjustments are included in the log file.

## Patentansprüche

1. Verfahren zum Optimieren eines Roboterprogramms einer Schweißrobotereinheit (1), wobei das Verfahren umfasst:
- Zusammenstellen von Informationen, die sich auf einen Schweißpfad an einem oder mehreren Werkstücken (12a-b) beziehen, und von beim Ausführen des Roboterprogramms in einem eine Schweißnaht an dem einen oder den mehreren Werkstücken (12a-b) ausbildenden Schweißvorgang aufgezeichneten Schweißparametern in einer Protokolldatei, und
- Verarbeiten der Protokolldatei, um eine geometrische Visualisierung der Protokolldatei auszubilden, so dass die Schweißparameter mit geometrischen Positionen der Schweißung gepaart werden,
wobei der Schweißpfad in mehrere Cluster aufgeteilt wird, wobei jedes Cluster Informationen über die Schweißparameter am jeweiligen Abschnitt des Schweißpfads umfasst, wobei die Cluster auf der geometrischen Visualisierung der Protokolldatei markiert sind.

2. Verfahren nach Anspruch 1, wobei das Verfahren umfasst:
- Positionieren des einen oder der mehreren Werkstücke (12a-b) in einer vorbestimmten Konfiguration,
- Erzeugen des Roboterprogramms durch Eingabe von Daten für den Schweißvorgang in Bezug auf den Schweißpfad, und
- Ausführen des Roboterprogramms, wodurch die Schweißung an dem einen oder den mehreren Werkstücken (12a-b) ausgebildet wird, während Schweißparameter in Bezug auf geometrische Positionen an dem einen oder den mehreren Werkstücken (12a-b) aufgezeichnet werden.

3. Verfahren nach einem der vorhergehenden Ansprüche, wobei geometrische Daten des einen oder der mehreren Werkstücke in der Protokolldatei zusammengestellt werden.

4. Verfahren nach einem der vorhergehenden Ansprüche, wobei das Verfahren umfasst:
- Anpassen des Roboterprogramms durch Anpassen eines oder mehrerer Schweißparameter in Bezug auf eine oder mehrere geometrische Positionen der Schweißung, wodurch ein angepasstes Roboterprogramm ausgebildet wird,
- Ausführen des angepassten Roboterprogramms, wodurch eine neue Schweißung an einem oder mehreren Werkstücken (12a-b) ausgebildet wird,
- Zusammenstellen von Informationen, die sich auf einen Schweißpfad der neuen Schweißung beziehen, und von beim Ausführen des angepassten Roboterprogramms aufgezeichneten Schweißparametern in einer neuen Protokolldatei, und
- Verarbeiten der neuen Protokolldatei, um eine neue geometrische Visualisierung der neuen Protokolldatei auszubilden, so dass die Schweißparameter mit geometrischen Positionen der neuen Schweißung gepaart werden.

5. Verfahren nach Anspruch 4, wobei das Verfahren ein Wiederholen einer Sequenz der Schritte in Anspruch 4, solange bis ein optimiertes angepasstes Roboterprogramm erzeugt worden ist, umfasst.

6. Verfahren nach einem der vorhergehenden Ansprüche, wobei die geometrischen Positionen in drei Dimensionen angegeben werden und die geometrische Visualisierung eine die Protokolldatei offenbarende dreidimensionale Darstellung ist, so dass die Schweißparameter mit geometrischen Positionen der Schweißung an dem einen oder den mehreren Werkstücken (12a-b) gepaart werden.

7. Verfahren nach Anspruch 6, wobei das Verfahren umfasst:
- Empfangen einer Eingabe einer Auswahl eines oder mehrerer Cluster, und
- Anzeigen von detaillierten Informationen der Schweißparameter, die sich auf den jeweiligen Abschnitt des Schweißpfads des ausgewählten einen oder der ausgewählten mehreren Cluster beziehen.

8. Verfahren nach einem der vorhergehenden Ansprüche, wobei die Schweißparameter wenigstens eines aus Spannung, Strom, Kontaktdruck, Verschiebungsgeschwindigkeit eines Roboterarms und an einem Roboterpfad vorgenommener Korrektur sind.

9. Verfahren nach einem der vorhergehenden Ansprüche, wobei die Robotereinheit (1) ausgelegt ist, eine Nahtschweißung an dem einen oder den mehreren Werkstücken (12a-b) auszubilden.

10. Verfahren nach einem der vorhergehenden Ansprüche, wobei die Robotereinheit (1) einen oder mehrere Sensoren umfasst, die ausgelegt sind, für den Schweißvorgang relevante Informationen zu sammeln, und wobei das Roboterprogramm ausgelegt ist, während dessen Ausführung automatisch basierend auf den aufgezeichneten Informationen angepasst zu werden, wobei die Informationen über die Anpassungen in der Protokolldatei aufgenommen werden.

## Revendications

1. Procédé permettant d'optimiser un programme robotique d'une unité robotique de soudage (1), le procédé consistant à :
- compiler dans un fichier journal des informations relatives à un axe de soudage sur une ou plusieurs pièces (12a à 12b), et des paramètres de soudage enregistrés lors de l'exécution du programme robotique dans une opération de soudage formant une soudure sur la ou les pièces (12a à 12b), et
- traiter le fichier journal pour former une visualisation géométrique du fichier journal de sorte que les paramètres de soudage soient appariés avec les positions géométriques de la soudure,
dans lequel l'axe de soudage est divisé en une pluralité de grappes, chaque grappe comprenant des informations sur les paramètres de soudage au niveau de la partie respective de l'axe de soudage, dans lequel les grappes sont marquées sur la visualisation géométrique du fichier journal.

2. Procédé selon la revendication 1, le procédé consistant à :
- positionner la ou les pièces (12a à 12b) dans une configuration prédéfinie,
- créer le programme robotique par une entrée de données pour l'opération de soudage par rapport à l'axe de soudage, et
- exécuter le programme robotique, ce qui permet de former la soudure sur la ou les pièces (12a à 12b) tout en enregistrant les paramètres de soudage par rapport aux positions géométriques sur la ou les pièces (12a à 12b) .

3. Procédé selon l'une quelconque des revendications précédentes, dans lequel les données géométriques de la ou des pièces sont compilées dans le fichier journal.

4. Procédé selon l'une quelconque des revendications précédentes, le procédé consistant à :
- ajuster le programme robotique en ajustant un ou plusieurs paramètres de soudage par rapport à une ou plusieurs positions géométriques de la soudure, ce qui permet de former un programme robotique ajusté,
- exécuter le programme robotique ajusté, ce qui permet de former une nouvelle soudure sur une ou plusieurs pièces (12a à 12b),
- compiler dans un nouveau fichier journal des informations relatives à un axe de soudage de la nouvelle soudure, et les paramètres de soudage enregistrés tout en exécutant le programme robotique ajusté, et
- traiter le nouveau fichier journal pour former une nouvelle visualisation géométrique du nouveau fichier journal de sorte que les paramètres de soudage soient appariés avec des positions géométriques de la nouvelle soudure.

5. Procédé selon la revendication 4, le procédé consistant à répéter une séquence des étapes de la revendication 4 jusqu'à ce qu'un programme robotique ajusté optimisé ait été créé.

6. Procédé selon l'une quelconque des revendications précédentes, dans lequel les positions géométriques sont données en trois dimensions et la visualisation géométrique est une représentation tridimensionnelle décrivant le fichier journal de sorte que les paramètres de soudage soient appariés avec les positions géométriques de la soudure au niveau de la ou des pièces (12a à 12b).

7. Procédé selon la revendication 6, le procédé consistant à
- recevoir une entrée d'une sélection d'une ou de plusieurs grappes, et
- afficher les informations détaillées des paramètres de soudage relatives à la partie respective de l'axe de soudage de la ou des grappes sélectionnées.

8. Procédé selon l'une quelconque des revendications précédentes, dans lequel les paramètres de soudage sont la tension, et/ou le courant, et/ou la pression de contact, et/ou la vitesse de déplacement d'un bras robotique et/ou la correction apportée à un axe robotique.

9. Procédé selon l'une quelconque des revendications précédentes, dans lequel l'unité robotique (1) est conçue pour former un cordon de soudure sur la ou les pièces (12a à 12b).

10. Procédé selon l'une quelconque des revendications précédentes, dans lequel l'unité robotique (1) comprend un ou plusieurs capteurs conçus pour rassembler des informations pertinentes sur l'opération de soudage, et dans lequel le programme robotique est conçu, tout en étant exécuté, pour être automatiquement ajusté sur la base desdites informations enregistrées, lesdites informations sur les ajustements étant incluses dans le fichier journal.
